# EUROPÄISCHE PATENTANMELDUNG

(11) **EP 1 920 806 A1**
(43) Veröffentlichungstag der Anmeldung: **14.05.2008**
(21) Anmeldenummer: 06769738.3
(22) Anmeldetag: 29.06.2006
(51) Int. Cl.: A63G 31/00, B64D 23/00, G01M 9/02

(54) **WINDTUNNEL ZUM TRAINIEREN VON SPORTFALLSCHIRMSPRINGERN**

(30) Priorität: 12.07.2005 UA 2005006866
(71) Anmelder: Petruk, Victor Borisovich, Kiev 02091 (UA)
(72) Erfinder: Petruk, Victor Borisovich, Kiev 02091 (UA)
(74) Vertreter: Jeck, Anton
(86) Internationale Anmeldenummer: PCT/UA2006/000042
(87) Internationale Veröffentlichungsnummer: WO 2007/008184

(57) **Zusammenfassung**

Die Erfindung betrifft Windkanalanlagen, insbesondere ein Trainingsgerät zur Ausbildung von Fallschirmspringern und zu Unterhaltungszwecken. Die Windkanalanlage gemäß der Erfindung zur Ausbildung von Fallschirmsportspringern weist einen Kanal auf, in dem folgende Elemente aufeinanderfolgend eingebaut und miteinander verbunden sind: ein Einlaufdiffusor, ein erster Arbeitsbereich, ein Zwischendiffusor und ein zweiter Arbeitsbereich. Die Arbeitsbereiche sind als Diffusorbereiche mit unterschiedlichen, länglichen Gradienten der Stromgeschwindigkeit ausgebildet, wobei der Arbeitsbereich mit dem kleineren, länglichen Geschwindigkeitsgradienten eine kleinere Länge und der Arbeitsbereich mit dem größeren, länglichen Geschwindigkeitsgradienten eine größere Länge aufweist und wobei ferner der Arbeitsbereich mit dem größeren, länglichen Geschwindigkeitsgradienten mindestens eine Querschnittsfläche aufweist. Ein Wabenkörper ist zwischen den Arbeitsbereichen angeordnet. Die Eingänge und Ausgänge der Arbeitsbereiche sind mit Sicherheitsnetzen versehen. Der Aufbau der Windkanalanlage gemäß der Erfindung ermöglicht gleichzeitig ein Training von Fallschirmspringern für Gruppenakrobatik und für artistische Arten des Fallschirmspringens unter Bedingungen, die an eine gegebene Trainingsart maximal angepasst sind, wobei die Trainingsqualität verbessert und die Kostenwirksamkeit der Windkanalanlage wesentlich erhöht wird.

## Beschreibung

Diese Erfindung betrifft Windkanalanlagen, insbesondere ein Trainingsgerät zur Ausbildung von Fallschirmspringern und zu Unterhaltungszwecken.

Die im Fallschirmsport bekannten Disziplinen, die auch den freien Fall betreffen, können in zwei Kategorien eingeteilt werden: in solche, die unter einer konstanten Fallgeschwindigkeit (etwa 50-55m/s) ausgeführt werden, und in solche, die unter einer veränderlichen Fallgeschwindigkeit (etwa im Bereich von 45-70m/s) ausgeführt werden. Zur ersten Kategorie gehören die Freifallformation und die Anfängerausbildung für Fallschirmspringer (Erwerb von Fertigkeiten beim stabilen Fall). Zur zweiten Kategorie zählen künstlerische Arten des Fallschirmsports: Freiflug, Freistil-Springen und andere.

Die Arbeit eines Fallschirmspringers oder einer Gruppe von Fallschirmspringern im Arbeitsbereich eines Windkanals erfordert, dass die auf-den Körper des Fallschirmspringers wirkende Winddruckkraft der Kraft seines Gewichts entspricht. Im anderen Fall wird die Ungleichheit der genannten Kräfte zur Bewegung des Fallschirmspringers entlang der Achse des Stroms und zum Verlassen des Arbeitsbereichs oder zum Aufprall auf Sicherheitsnetze führen, weil der Arbeitsbereich räumlich begrenzt ist.

Eine besonders rationelle Lösung, die es ermöglicht, einen oder mehrere Fallschirmspringer im Arbeitsbereich zu halten, besteht darin, dass der Arbeitsbereich in Form eines Diffusors ausgeführt wird. Die Geschwindigkeit am Eingang des Diffusors entspricht ungefähr der oberen Grenze des Bereichs der Fallgeschwindigkeiten. Die Geschwindigkeit am Ausgang des Diffusors entspricht ungefähr der unteren Grenze des Bereichs der Fallgeschwindigkeiten. Dabei erfolgt eine Selbststabilisation der Lage des Körpers aufgrund des Vorhandenseins eines negativen Gradienten der Geschwindigkeiten des Stroms entlang der Achse des Arbeitsbereichs. Das bedeutet, der Körper nimmt ein solches Niveau im Arbeitsbereich ein, in dem die auf den Körper wirkende Windkraft dem Gewicht des Körpers gleich ist. Die Veränderung des größten Querschnitts oder des Widerstandsbeiwerts (bei der Veränderung der Lage des Körpers) verursacht den Übergang des Körpers auf ein neues, gleich schweres Niveau.

Durch das in der beigefügten Literaturliste genannte Dokument [1] ist ein Trainingsgerät zur Ausbildung von Fallschirmspringern bekannt. Dieses Trainingsgerät weist einen Arbeitsbereich in Form eines Diffusors mit einem Geschwindigkeitsbereich von 45-70m/s auf. Der Arbeitsbereich des Trainigsgeräts umfasst zwei Zonen, zwischen denen ein Netz eingebaut werden kann. Wenn die Übungen in den künstlerischen Arten des Fallschirmsports ausgeführt werden, wird das Netz, das die Bereiche trennt, nicht eingebaut. So können sich die Fallschirmspringer von der unteren Grenze bis zur oberen Grenze des Arbeitsbereichs bewegen. Wenn die Übungen in der Freifallformation oder für die Anfängerausbildung der Fallschirmspringer ausgeführt werden, wird das Netz eingebaut. Die Fallschirmspringer arbeiten im oberen Teil des Arbeitsbereichs, und zwar in einem Querschnittsbereich, in dem die Geschwindigkeit des Stroms etwa 50m/s beträgt.

Der größte Mangel des genannten Trainingsgeräts ist eine unbefriedigende Qualität des Stroms im zweiten Bereich. Das wirkt negativ auf die Qualität der Übungen der Teams für die Freifallformation und führt zur Festigung von falschen Reflexfertigkeiten. Dies wirkt sich negativ auf die Ergebnisse des Teams beim Fallschirmspringen aus. Das hat drei Ursachen:
1. um die Ausführung einiger Figuren bei der Freifallformation zu beschleunigen, bewegen sich die Fallschirmspringer so, dass ein Fallschirmspringer unterhalb des Körpers eines anderen Fallschirmspringers durchgeht; bei der Ausführung des Formationsübergangs befinden sich die Fallschirmspringer auf unterschiedlichen Ebenen, bewegen sich aber während der Formation (beim Übergang) mit gleichen, vertikalen Geschwindigkeiten; bei der Ausführung einer solchen Formation im Arbeitsbereich des Windkanals, der einen länglichen Geschwindigkeitsgradienten hat, befindet sich der Fallschirmspringer, der höher ist, in einem Querschnittsbereich, in dem die Windstromgeschwindigkeit und der Windstau kleiner sind; der Fallschirmspringer, der niedriger hinuntergestiegen ist, befindet sich im Querschnittbereich, in dem die Windstromgeschwindigkeit und der Windstau größer sind; um die Veränderung des Windstaus zu kompensieren, ist der obere Fallschirmspringer gezwungen, den größten Querschnitt seines Körpers zu erhöhen, und der untere Fallschirmspringer soll den größten Querschnitt seines Körpers dementsprechend verkleinern; intensive Übungen im Windkanal führen dazu, dass die oben genannten Handlungen zum Ausgleich der Veränderung des Windstaus reflektorisch werden; beim Fallschirmspringen in freier Atmosphäre fehlt der längliche Gradient der Geschwindigkeit; die befestigten, reflektorischen Fertigkeiten für die Kompensation des Gradienten mittels der Erhöhung oder Verminderung des Querschnitts des Körpers führen dazu, dass bei den Formationen mit dem Übergang auf eine andere Ebene der obere Fallschirmspringer höher als notwendig steigt, und der untere Fallschirmspringer niedriger als notwendig sinkt; das führt zu einer vertikalen Verteilung der Fallschirmspringer und zu einer Verschlechterung der Ergebnisse;
2. da es einen Anfangsdiffusorbereich gibt, wird das Profil der Geschwindigkeiten verändert, die Dicke der Grenzschicht vergrößert sich, und die Kernzone der konstanten Geschwindigkeiten verkleinert sich das Profil der Geschwindigkeiten wird gewölbt; dabei wirkt auf den Teil des Körpers, der näher zur Achse des Stromes liegt, ein größerer Windstau; auf den Teil des Körpers, der weiter von der Achse des Windstroms liegt, wirkt ein kleinerer Windstau; das ruft ein Drehmoment hervor, das den Anlaufwinkel des Körpers verändert; dies führt zur Abweichung der kompletten, aerodynamischen Kraft in Richtung der Peripherie des Windstroms, aufgrund dessen die seitliche Komponente der vollen, aerodynamischen Kraft entsteht, die den Körper auf die Stromperipherie ausstößt; diese seitliche Kraft ist gleich Null auf der Achse des Windstroms und erhöht sich mit der Entfernung von der Achse;
3. infolge des Vorhandenseins des Öffnungswinkels sind die Richtungen der Geschwindigkeitsvektoren innerhalb des Querschnitts des Arbeitsbereichs nicht parallel; in der Mitte des Arbeitsbereichs ist der Geschwindigkeitsvektor dem Vektor der Schwerkraft parallel. An der Wand des Arbeitsbereichs zwischen dem Vektor der Stromgeschwindigkeit und dem Vektor der Schwerkraft gibt es einen Winkel, der halb so groß wie der Öffnungswinkel des Diffusors ist; dementsprechend ist die komplette, aerodynamische Kraft für einen symmetrischen Körper in der Mitte des Arbeitsbereichs genau nach oben, d.h. senkrecht, gerichtet; an der Peripherie ist sie dagegen mit einem Winkel nach oben gerichtet; der Winkel ist desto größer, je näher der Körper zur Wand liegt; deshalb wirkt auf den Körper, der nicht an der Stromachse liegt, eine seitliche Kraft, die den Körper auf die Peripherie des Stroms ausstößt. Diese seitliche Kraft ist gleich Null auf der Achse des Stroms und erhöht sich mit der Entfernung von der Achse.

Bei der Addition der oben genannten, seitlichen Kräfte entsteht der Effekt der Arbeit auf einer Kugelfläche, weil der Körper immer dazu neigt, zur Seite des Arbeitsbereichs zu "rutschen". Um diesen Effekt zu kompensieren, lassen die Fallschirmspringer ihren Körper zur Achse des Arbeitsbereichs hin neigen. Intensive Übungen im Windkanal führen dazu, dass solche Handlungen zum Ausgleich der seitlichen Kraft reflektorisch werden. Beim Fallschirmspringen in freier Atmosphäre fehlt die seitliche Kraft. Die befestigten Reflexfertigkeiten für die Kompensation der seitlichen Kraft mittels der Neigung des Körpers zur Mitte der Gruppe führen dazu, dass das Team viel zu eng aneinander arbeitet, d.h. "sich zusammendrängt". Das wirkt negativ auf die Ergebnisse.

Ein weiterer Mangel des genannten Trainingsgeräts ist der überflüssige, hydraulische Verlust bei der Arbeit im oberen Teil des Arbeitsbereichs, weil der untere Diffusorbereich, der in diesem Fall nicht verwendet wird, das untere Sicherheitsnetz und der Honeycomb (Wabengleichrichter), die im engsten Querschnitt eingebaut sind, die Hauptursachen für die hydraulischen Verluste sind.

Die genannten Mängel können durch die Herstellung eines Trainingsgeräts behoben werden, das zwei Arbeitsbereiche aufweist, von denen jeder für eine wirksame Ausbildung für eine bestimmte Art des Fallschirmsports angepasst ist.

Der Arbeitsbereich, der für die Übungen für die Freifallformation und für die Anfängerausbildung von Fallschirmspringern konzipiert ist, soll eine minimale Länge des Anfangsbereichs und einen minimalen Gradienten der Geschwindigkeit aufweisen. Die Länge eines solchen Arbeitsbereichs ist relativ klein (etwa eine Abstandslehre), und der Öffnungswinkel beträgt etwa 0,5-5°. Der kleine, längliche Gradient der Geschwindigkeit im Arbeitsbereich mindert die erforderliche Kompensation der Veränderung des Windstaus in verschiedenen Niveaus bei der Ausführung der Drehungen mit der Überquerung der Ebenen. Die kleine, relative Länge des Arbeitsbereichs schließt die Erhöhung der Grenzschicht mit einer wesentlichen Dicke aus und ermöglicht es, eine Kernzone konstanter Geschwindigkeiten zu erhalten. Die Kernzone nähert sich dem Durchmesser des Arbeitsbereichs. Das schließt die erste Komponente der seitlichen Kraft aus. Der kleine Öffnungswinkel des Arbeitsbereichs mindert die Abweichung der vollen, aerodynamischen Kraft in der Peripherie des Stroms, so dass die zweite Komponente der seitlichen Kraft vermindert wird.

Der Arbeitsbereich, der für die Übungen für künstlerische Arten des Fallschirmsports konzipiert ist, soll einen entsprechenden Geschwindigkeitsbereich am Ein- und Auslauf aufweisen. Die Länge des Arbeitsbereichs soll etwa 2-4 Abstandslehren betragen, wenn der Öffnungswinkel 5-10° beträgt. Das Vorhandensein des Gradienten der Geschwindigkeiten und der seitlichen Kraft sind in diesem Fall weniger kritisch. Entscheidend ist die Geschwindigkeit, weshalb die Länge des Arbeitsbereichs und der Öffnungswinkel für die Minimisierung der hydraulischen Verluste im Windkanal und der technologischen Begrenzungen angenommen werden kann.

Die genannten Arbeitszonen können innerhalb des Trainingsgeräts parallel oder in Reihe aufgestellt werden oder austauschbar sein. Besonders wirksam ist eine Reihenaufstellung der Arbeitsbereiche.

Durch das Dokument [2] ist ein Trainingsgerät für Fallschirmspringer mit mehreren Arbeitsbereichen bekannt, die aufeinanderfolgend auf einer Achse liegen.

Der Hauptmangel des genannten Trainingsgeräts besteht darin, dass die Ventilatoren zwischen den Arbeitsbereichen im Windkanal aufgebaut werden und dass die Elemente fehlen, die das Geschwindigkeitsfeld ausgleichen. Ein notwendiges Element des Ventilators, der die Druckgefälle erzeugt, ist eine Hülse. Der Durchmesser dieser Hülse in den modernen Ventilatoren beträgt 0,4 bis 0,7 des Durchmessers des Kanals, in dem der Ventilator eingebaut ist. Diese Hülse erzeugt eine Wirbelschleppe mit einer wesentlichen Breite und Länge. Das Vorhandensein einer Wirbelschleppe aufgrund der Hülse des Ventilators im Arbeitsbereich macht ein vollinhaltliches Training unmöglich. Das hängt damit zusammen, dass, wenn der Fallschirmspringer in die Wirbelschleppe gelangt, in der der Windstau geringer als im Hauptstrom ist, es zum Stürzen des Fallschirmspringers auf das Sicherheitsnetz kommt. Es ist so gut wie unmöglich, sich im Arbeitsbereich zu bewegen, ohne in die Wirbelschleppe zu gelangen, weil diese den wesentlichen Teil des Durchmessers des Arbeitsbereichs einnimmt. Außerdem verursachen die Hülsen der Ventilatoren wesentliche, hydraulische Verluste. Die Hülsen der Ventilatoren befinden sich in Querschnitten, deren Fläche mit den Querschnittsflächen der Arbeitsbereiche zusammenfällt.

Die genannten Mängel können behoben werden, wenn ein Windkanal hergestellt wird, in dem die Elemente im Strömungsbereich fehlen, die die Gleichmäßigkeit des Geschwindigkeitsfelds verschlechtern, so dass lokale Stromablösungen und wesentliche, hydraulische Verluste entstehen.

Der der Erfindung am nächsten kommende Stand der Technik ist ein Windkanal, der für aerodynamische Untersuchungen geeignet ist [3, Seite 177]. Der Windkanal enthält einen Kanal, der durch folgende eingebaute und verbundene Elemente gebildet wird: einen Einlaufdiffusor, ein erster Arbeitsbereich, ein Zwischendiffusor und ein zweiter Arbeitsbereich.

Der Hauptmangel des genannten Windkanals besteht darin, dass es unmöglich ist, gleichzeitig in beiden Arbeitsbereichen zu arbeiten (es fehlen Elemente, die verhindern, dass die Wirbelschleppe von den im ersten Arbeitsbereich eingerichteten Modellen in den zweiten Arbeitsbereich gelangt). Deswegen werden die Versuche in Arbeitsbereichen nacheinander durchgeführt. Dabei verläuft der Strom bei der Arbeit in einem Arbeitsbereich auch durch den anderen Arbeitsbereich, der nicht verwendet wird. Dadurch werden zusätzliche Störungsverluste erzeugt, insbesondere im Fall der Arbeit im ersten Arbeitsbereich, weil eine zusätzliche Einschnürung im Zwischendiffusor sowie das weitere Bremsen im Diffusor hinter dem zweiten Arbeitsbereich die gesamten, hydraulischen Verluste im Windkanal wesentlich erhöhen.

Die Mängel des genannten Windkanals in Bezug auf die Ausbildung der Sportfallschirmspringer bestehen darin, dass der Gradient der Geschwindigkeiten in den Arbeitsbereichen fehlt (die Geschwindigkeit in der Kernzone der konstanten Geschwindigkeit ist bei jeder Überquerung des Arbeitsbereichs konstant). Es ist auch unmöglich, dass die Fallschirmspringer gleichzeitig im ersten Arbeitsbereich und im zweiten Arbeitsbereich arbeiten, weil die Geschwindigkeiten sich wesentlich unterscheiden. Wenn im ersten Arbeitsbereich eine Gleichgewichtsgeschwindigkeit eingestellt wird, so wird die Geschwindigkeit im zweiten Arbeitsbereich größer als die Gleichgewichtsgeschwindigkeit. Deshalb werden die Fallschirmspringer durch den überflüssigen Windstau in den Diffusor ausgestoßen oder zum oberen Sicherheitsnetz gedrückt (wenn dieses eingebaut ist). Wenn im zweiten Arbeitsbereich eine Gleichgewichtsgeschwindigkeit eingestellt wird, so wird die Geschwindigkeit im ersten Arbeitsbereich kleiner als die Gleichgewichtsgeschwindigkeit. Deshalb werden die Fallschirmspringer durch den Einlaufdiffusor durchfallen oder auf das untere Sicherheitsnetz fallen (wenn dieses eingebaut ist).

Als Aufgabe liegt der Erfindung die Entwicklung der Konstruktion eines Windkanals zur Ausbildung von Fallschirmspringern zugrunde. Der Windkanal soll Arbeitsbereiche enthalten, in denen Stromkennwerte realisiert werden, die optimal für die Ausbildung der Sportler für die Freifallformation und für die künstlerischen Arten des Fallschirmsports angepasst sind. Der Windkanal soll eine gleichzeitige Ausbildung der Fallschirmspringer in beiden Arbeitsbereichen ermöglichen.

Diese Aufgabe wird dadurch gelöst, dass der Windkanal einen Kanal aufweist, der durch folgende, aufeinanderfolgend eingebaute und verbundene Elemente gebildet wird: einen Einlaufdiffusor, einen ersten Arbeitsbereich, einen Zwischendiffusor und einen zweiten Arbeitsbereich. Der Windkanal soll Arbeitsbereiche aufweisen, die als Diffusorbereiche mit unterschiedlichen, länglichen Gradienten der Stromgeschwindigkeit ausgeführt sind. Dabei weist der Arbeitsbereich mit dem kleineren, länglichen Geschwindigkeitsgradienten eine kleinere Länge und der Arbeitsbereich mit dem größeren, länglichen Geschwindigkeitsgradienten eine größere Länge auf. Der Arbeitsbereich mit dem größeren, länglichen Geschwindigkeitsgradienten umfasst mindestens einen Querschnitt, der zur Windstromachse senkrecht steht. Die Fläche fält mit der Fläche des Einlaufquerschnitts des Arbeitsbereichs mit dem kleineren, länglichen Geschwindigkeitsgradienten zusammen. Der Arbeitsbereich mit dem kleineren, länglichen Geschwindigkeitsgradienten ist hinter dem Einlaufdiffusor eingebaut. Der Arbeitsbereich mit dem größeren, länglichen Geschwindigkeitsgradienten ist hinter dem Zwischendiffusor eingebaut. Am Auslauf des ersten Arbeitsbereichs ist ein Honeycomb eingebaut. Am Einlauf des ersten Arbeitsbereichs, am Einlauf des Zwischendiffusors und am Auslauf des zweiten Arbeitsbereichs sind Sicherheitsnetze eingebaut. Die Querschnittsfläche des Kanals an der Verbindungsstelle des Zwischendiffusors und des zweiten Arbeitsbereichs ist so gewählt, dass das Rutschen der Fallschirmspringer aus dem zweiten Arbeitsbereich in den Zwischendiffusor bei der normalen Funktion des Antriebs (Geschwindigkeit im Querschnitt etwa 80m/s) ausgeschlossen wird.

Der Windkanal gemäß der Erfindung zur Ausbildung von Fallschirmspringern umfast einen Einlaufdiffusor, ein Sicherheitsnetz, den ersten Arbeitsbereich, ein Honeycomb, ein Zwischensicherheitsnetz, einen Zwischendiffusor, einen zweiten Arbeitsbereich und ein Sicherheitsnetz am Auslauf, wobei alle diese Bestandteile aufeinanderfolgend angeordnet sind. Die Arbeitsbereiche sind als Diffusorbereiche mit unterschiedlichen länglichen Gradienten der Stromgeschwindigkeit ausgebildet. Dabei weist der Arbeitsbereich mit dem kleineren, länglichen Geschwindigkeitsgradienten eine kleinere Länge und der Arbeitsbereich mit dem größeren, länglichen Geschwindigkeitsgradienten eine größere Länge auf.

Zu den Unterscheidungsmerkmalen zum Stand der Technik gehören:
- die Anwendung von Arbeitsbereichen, die als Diffusorarbeitsbereiche ausgebildet sind, wobei der längliche Gradient der Stromgeschwindigkeit unterschiedlich ist;
- das Vorhandensein im Arbeitsbereich mit größerem länglichen Geschwindigkeitsgradienten von mindestens einem Querschnitt, der zur Windstromachsesnkrecht steht; die Fläche fällt mit der Fläche des Einlaufquerschnitts des Arbeitsbereichs mit dem kleineren, länglichen Geschwindigkeitsgradienten zusammen;
- die Anwendung eines Honeycombs am Auslauf des ersten Arbeitsbereichs;
- die Anwendung von Sicherheitsnetzen.

Die Diffusorarbeitsbereiche ermöglichen, den Fallschirmspringer oder Gruppen von Fallschirmspringern im Arbeitsbereich zu halten, wenn er bzw. sie den Widerstandswert und den größten Querschnitt des Körpers bei den Bewegungen ändert bzw. ändern. Das erfolgt mittels einer Selbststabilisierung ohne Steuerung. Unterschiedliche, längliche Gradienten der Geschwindigkeit ermöglichen, in jedem Bereich einen Windstrom mit Kennwerten zu erzeugen, die optimal für die bestimmte Art des Fallschirmsports sind. Das Vorhandensein von mindestens einer Querschnittsfläche, die zur Windstromachse senkrecht steht und mit der Einlaufquerschnittsfläche des Arbeitsbereichs mit dem kleineren, länglichen Geschwindigkeitsgradienten zusammenfällt, innerhalb des Arbeitsbereichs mit dem größeren, länglichen Geschwindigkeitsgradienten ermöglicht, gleichzeitig in beiden Arbeitsbereichen eine Gleichgewichtsgeschwindigkeit zu gewinnen. Das heißt, es ist möglich, gleichzeitig in beiden Bereichen zu üben. Die Anordnung des Arbeitsbereichs mit dem kleineren, länglichen Geschwindigkeitsgradienten vor dem Arbeitsbereich mit dem größeren, länglichen Geschwindigkeitsgradienten ermöglicht, die Qualität des Windstroms für Fallschirmspringer zu erhöhen, die die Freifallformation üben (Sie reagieren empfindlicher auf eine Ungleichmäßigkeit des Windstroms). Dadurch wird auch die Wirksamkeit des Zwischendiffusors erhöht, so dass die Ungleichmäßigkeit des Geschwindigkeitsfelds proportional dem Quadrat der Einschnürrung vermindert wird (Verhältnis der Fläche des Einlaufquerschnitts zur Fläche des Auslaufquerschnitts). Der Honeycomb am Auslauf des ersten Arbeitsbereichs vermindert das Ausmaß der Turbulenz, die Drehung und den Abwind des Stroms, die durch die Fallschirmspringer im ersten Arbeitsbereich erzeugt werden. Dadurch wird die Qualität des Stroms am Einlauf des zweiten Arbeitsbereichs verbessert und ermöglicht, in beiden Arbeitsbereichen gleichzeitig zu arbeiten. Die Sicherheitsnetze erhöhen die Sicherheit der Übungen im Windkanal, insbesondere beim Ausfall des Antriebs. Außerdem gleicht das Zwischensicherheitsnetz zusätzlich das Geschwindigkeitsfeld des Stroms am Einlauf des Zwischendiffusors und dementsprechend am Einlauf des zweiten Arbeitsbereichs aus.

Die Vereinigung der genannten, bekannten und unbekannten Merkmale sorgt für die Möglichkeit der gleichzeitigen Ausbildung der Fallschirmspringer in der Freifallformation und in den künstlerischen Arten des Fallschirmsports unter optimalen Bedingungen für die bestimmte Sportart. Dadurch ist es möglich, die Qualität der Übungen zu verbessern und den wirtschaftlichen Nutzeffekt des Windkanals wesentlich zu erhöhen.

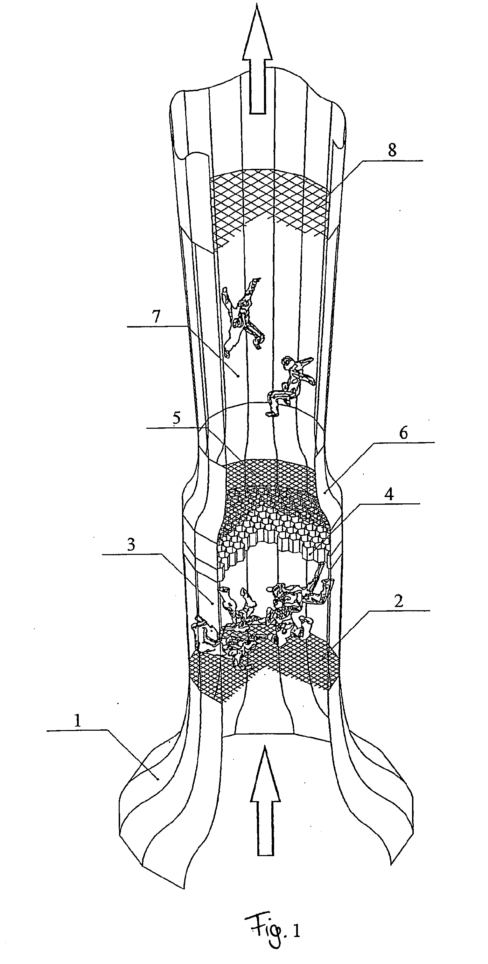

Die Erfindung wird anhand eines in Fig. 1 dargestellten Ausführungsbeispiels näher erläutert; in Fig. 1 ist ein Schema eines Windkanals dargestellt.

Die Konstruktion des Windkanals besteht aus einem Einlaufdiffusor 1, einem Sicherheitsnetz 2 am Einlauf, einem ersten Arbeitsbereich 3, einem Honeycomb 4, einem Zwischensicherheitsnetz 5, einem Zwischendiffusor 6, einem zweiten Arbeitsbereich 7 und einem Sicherheitsnetz 8 am Auslauf.

Der Windkanal arbeitet folgendermaßen. Eine Ventilatoranlage (in Fig. 1 nicht dargestellt) erzeugt ein Druckgefälle, wodurch sich die Luft im Windkanal von unten nach oben bewegt. Im Einlaufdiffusor 1 wird die Luft beschleunigt und das Geschwindigkeitsfeld ausgeglichen. Im ersten Arbeitsbereich 3 werden die Fallschirmspringer, die die Freifallformation üben, oder Anfänger ausgebildet. Dabei wird die Gleichmäßigkeit des Stromgeschwindigkeitsfeld gestört. Die Körper der Fallschirmspringer erzeugen eine Wirbelschleppe und deren Bewegungen führen zu einem Abwind und zur Drehung des Stroms. Im Honeycomb 4 wird das Ausmaß der Turbulenz, der Drehung und des Stromabwinds vermindert. Das Zwischensicherheitsnetz 5 gleicht teilweise das Geschwindigkeitsfeld aus. Im Zwischendiffusor 6 wird die Luft auch beschleunigt und das Geschwindigkeitsfeld ausgeglichen. Außerdem erfolgt ein natürlicher Ausgleich des Geschwindigkeitsfeld im Abschnitt zwischen den Arbeitsquerschnitten des ersten Arbeitsbereich und des zweiten Arbeitsbereichs durch die Luftzähigkeit und den Turbulenzaustausch. Im zweiten Arbeitsbereich 7 werden die Fallschirmspringer ausgebildet, die die künstlerischen Arten des Fallschirmsports üben. Da der zweite Arbeitsbereich ein Diffusor ist, erfolgt außerdem in diesem eine Bremsung des Stroms und eine teilweise Wiederherstellung des Drucks. Danach wird die Luft entweder ins Freie ausgestoßen (wenn der Windkanal einen offenen Kreis aufweist), oder in den Rückkanal gefördert und kehrt so in den Einlaufdiffusor 1 zurück (wenn der Windkanal einen geschlossenen Kreis aufweist). Wenn der Antrieb plötzlich ausfällt, landen die Fallschirmspringer im ersten Arbeitsbereich auf dem Sicherheitsnetz am Einlauf und die Fallschirmspringer im zweiten Arbeitskanal auf dem Zwischensicherheitsnetz.

### Literaturliste

[1] Patent Frankreichs FR 2 843 940 A1, IPC B64D023-00, 2002
[2] Patent Japans JP 2 152486, IPC A63G031-00, 864D023-00, G09B009-00,1990
[3] Werke des Zentralen Aero- und Hydrodynamischen Instituts, Ausgabe 2059, "Untersuchungen der Elemente der experimentellen, aerodynamischen Anlagen", Moskau, TsAGI, 1980, Seite 177.

## Patentansprüche

1. Windkanal zur Ausbildung von Fallschirmspringern, der einen Kanal aufweist, in dem folgende Elemente aufeinanderfolgend eingebaut und miteinander verbunden sind: ein Einlaufdiffusor, ein erster Arbeitsbereich, ein Zwischendiffusor und ein zweiter Arbeitsbereich,
**dadurch gekennzeichnet,**
**dass** die Arbeitsbereiche als Diffusorbereiche mit unterschiedlichen, länglichen Gradienten der Stromgeschwindigkeit ausgebildet sind, wobei der Arbeitsbereich mit dem kleineren, länglichen Geschwindigkeitsgradienten eine kleinere Länge und der Arbeitsbereich mit dem größeren, länglichen Geschwindigkeitsgradienten eine größere Länge aufweist und wobei ferner der Arbeitsbereich mit dem größeren, länglichen Geschwindigkeitsgradienten mindestens eine Querschnittsfläche aufweist, die senkrecht zur Windstromachse steht, die Windstromquerschnittsfläche mit der Fläche des Einlaufquerschnitts des Arbeitsbereichs mit dem kleineren, länglichen Geschwindigkeitsgradienten zusammenfällt und im Kanal Sicherheitsnetze eingebaut sind.

2. Windkanal nach Anspruch 1,
**dadurch gekennzeichnet,**
**dass** der Arbeitsbereich mit dem kleineren, länglichen Geschwindigkeitsgradienten hinter dem Einlaufdiffusor und der Arbeitsbereich mit dem größeren, länglichen Geschwindigkeitsgradienten hinter dem Zwischendiffusor eingebaut ist.

3. Windkanal nach Anspruch 1,
**dadurch gekennzeichnet,**
**dass** am Auslauf des ersten Arbeitsbereichs zusätzlich ein Honeycomb eingebaut ist.

4. Windkanal nach Anspruch 1,
**dadurch gekennzeichnet,**
**dass** das Sicherheitsnetz am Einlauf des ersten Arbeitsbereichs eingebaut ist.

5. Windkanal nach Anspruch 1,
**dadurch gekennzeichnet,**
**dass** das Sicherheitsnetz am Einlauf des Zwischendiffusors eingebaut ist.

6. Windkanal nach Anspruch 1 oder 3,
**dadurch gekennzeichnet, dass** das Sicherheitsnetz am Auslauf des zweiten Arbeitsbereichs eingebaut ist.
